# EUROPEAN PATENT SPECIFICATION

(11) **EP 0 402 995 B1**
(45) Date of publication and mention of the grant of the patent: **14.12.1994**
(21) Application number: 90201464.6
(22) Date of filing: 07.06.1990
(51) Int. Cl.: B01L 7/00, B01L 3/00

(54) **Temperature control device and reaction vessel**
Temperaturregelvorrichtung und Reaktionsgefäss
Dispositif de régulation de la température et récipient de réaction

(30) Priority: 12.06.1989 US 365079; 18.12.1989 US 452932
(43) Date of publication of application: 19.12.1990
(60) Divisional application: 94200297.3
(73) Proprietor: Johnson & Johnson Clinical Diagnostics, Inc., Rochester New York 14650 (US)
(72) Inventor: Devaney, Mark Joseph, Jr., c/o EASTMAN KODAK COMP., Rochester, New York 14650 (US); Lercher, John Stephen, c/o EASTMAN KODAK COMPANY, Rochester, New York 14650 (US); Wellman, Jeffrey Allen, c/o EASTMAN KODAK COMPANY, Rochester, New York 14650 (US)
(74) Representative: Mercer, Christopher Paul

(56) References cited:
- EP-A- 0 171 140
- WO-A-89/09437
- FR-A- 2 612 295
- US-A- 4 038 030
- US-A- 4 066 412
- US-A- 4 473 739

## Description

The invention relates to a device for heating and cooling a reaction vessel rapidly through various temperatures, and particularly those temperatures which are used in polymerase chain reaction (PCR) amplification.

Polymerase chain reaction (PCR) technology permits nucleic acid material, such as DNA, often extracted from as little as a single cell, to be amplified to hundreds of millions of copies. This is important since prior to PCR technology it was virtually impossible to detect a single DNA strand. However, when a single DNA strand, such as the DNA produced by a human immunodeficiency virus (e.g. HIV-I, otherwise known to cause AIDS), is added to amplifying reagents which will amplify the DNA of choice, hundreds of millions of copies of that DNA can be obtained in a relatively short time. Technology further allows for the detection of the amplified nucleic acid material (DNA, for example) using probes which hybridize to the amplified material of choice, such probes in turn either being immobilized or immobilizable to a solid support, such as a filter membrane, and/or being labeled for detection using enzymes or other moieties.

Conventionally, this has been done by amplifying the nucleic acid material in a stoppered plastic container until the desired number of copies have been formed. Thereafter, the container is reopened, such as by unstoppering, end either the amplified copies are withdrawn and transferred to detection apparatus, or detecting reagents are added to the container used for the amplification so that detection is done in the same container.

It has been discovered that such a technique is unsatisfactory for convenient and widespread use of PCR technology, because aerosols are produced in the act of unstoppering and/or transfer of fluids. Such aerosols contain a few molecules of the amplified nucleic acid material, and then proceed to disperse within the environment. Normally, such few molecules in the environment are not of great concern. However, in theory, only one DNA molecule is needed to contaminate other amplifying containers yet to be used for detection. If the errant DNA molecule floats into or is inadvertently carried by an operator to another amplifying container yet to be used, that one molecule is all which will be needed to provide the DNA needed for the next amplification. Needless to say, if the point of the next test is to see if a particular DNA is present (e.g. from HIV-I), end it is detected only because of the errant DNA and not that of the patient, the test is ruined. Thus, the very power of DNA amplification becomes the source of potential ruin of the tests. As a matter of fact, an entire lab has been proven to be contaminated by the unstoppering of just a few containers in which the sample has already been amplified. Although such a problem might be avoidable by using highly skilled and trained personnel who painstakingly minimize the aerosols produced, the need for such labor makes the technology impractical for general use.

The aforesaid problem has been solved by a containment cuvette, which can be a flexible pouch. Such pouch features wall materials which define a reaction compartment, one or both of the wall materials in the compartment being flexible.

Although such a pouch can be heated and cooled rapidly by a variety of devices through the numerous temperature changes known in the art to be needed to do PCR amplification, there has been a need prior to this invention for simple, inexpensive and yet efficient temperature control devices especially adapted to such rapid temperature changes. It has been found, for example, that thermal cycling by heating and cooling a metal block on which a pouch sits, is relatively slow and inefficient.

Although reaction vessel pouches have been moved through a heater and a seal-bursting station as disclosed in US-A-4066412, such technology has not been applicable to PCR since there is no provision for an active cooling cycle.

It is therefore an object of the present invention to provide a temperature control device which produces the efficient temperature changes needed for a PCR cuvette as noted above.

More specifically, according to one aspect of the present invention, there is provided apparatus for processing a reaction vessel to cycle it through at least two temperature changes, the apparatus comprising:
heating means for heating at least one side wall of a selected portion of said reaction vessel; and
moving means for moving the reaction vessel and the heating means in a prescribed path relative to one another;
characterized in that the apparatus further comprises cooling means for delivering cooling fluid over said heating means to actively cool the heating means at repeated intervals, the cooling means undergoing movement with the heating means.

In accordance with another aspect of the present invention, there is provided in combination, a flexible, collapsible reaction vessel comprising opposed side walls spaced apart at portions of the vessel to provide a compartment, and at least one liquid confined to the compartment, the side walls being sufficiently compliant as to conform the liquid-confining side walls to the surface of objects pressing thereagainst, and processing apparatus for the vessel as described above.

It is an advantageous feature of the invention that apparatus is provided which can efficiently, inexpensively and rapidly cycle the temperature of liquid in a containment pouch from about 95°C to at least 55°C to 70°C and back to about 95°C, within ± 1°C, in a time of from about 20s to 105s with a short dwell time at each of said temperatures, and without internal sensors.

It is a further advantageous feature of the invention that apparatus is provided to accurately produce such temperature cycling repeatedly for hundreds of times.

Other advantageous features of the invention are that it is small in size and has low power requirements.

The present invention will now be described by way of example only with reference to the accompanying drawings in which:
Figure 1 is a perspective view of a simplified containment cuvette which can be processed by the device according to the present invention;
Figure 2 is a fragmentary sectioned view taken generally along the line II-II of Figure 1;
Figure 3 is a fragmentary plan view illustrating a temperature control device constructed in accordance with the present invention, with a cuvette of Figure 1 in place;
Figure 4 is a sectioned view taken generally along the line IV-IV of Figure 3;
Figure 5 is a graph of time and temperature produced by the device and cuvette of Figure 3;
Figure 6 is a fragmentary view similar to that shown in a portion of Figure 4, but illustrating an alternative embodiment;
Figure 7 is a plan view similar to that shown in Figure 3, but illustrating still another alternate embodiment.
Figure 8 is a partially sectioned view similar to that shown in Figure 4 but of an alternate embodiment;
Figure 9 is a plot of temperature and time achieved by the combination of this invention, for six different compartments processed as described, the traces showing the reproducibility of thermal cycles of the apparatus; and
Figures 10 and 11 are each a plot of temperature vs. time similar to the plot shown in Figure 9, except that each curve represents a different level of force exerted against the compliant compartment.

The invention is described for preferred embodiments in which a PCR containment cuvette is being processed by the device, and in which both platens on opposite sides of the cuvette are heated and cooled. In addition, the invention is useful to heat and cool any kind of reaction vessel, whether or not used for PCR amplification, and with only one of the platens operative to effect temperature changes.

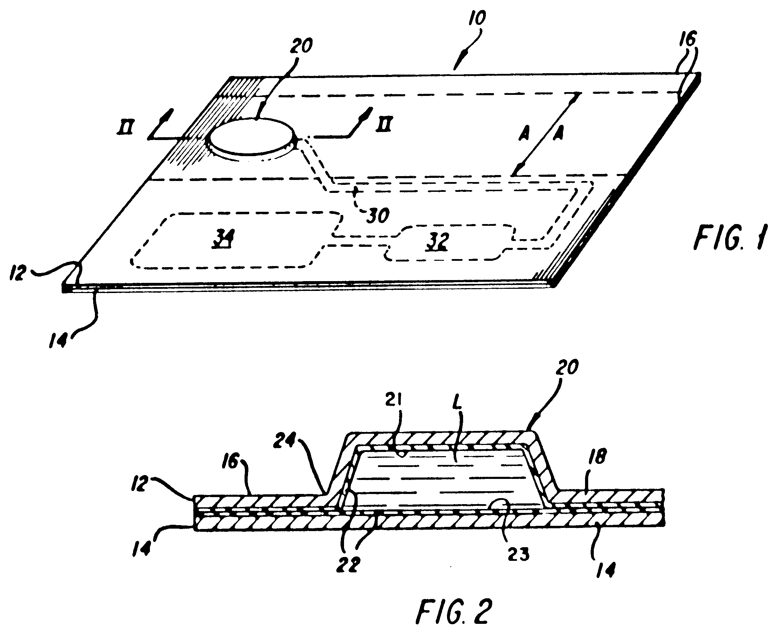

Referring first to Figures 1 and 2, a preferred reaction vessel operated upon by the device of the invention comprises a flexible pouch 10 formed by preferably compliant, laminated sheets 12 and 14 sealed at least around the periphery 16. Sheets 12 and 14 can be formed, in at least the part thereof providing a reaction compartment 20, as shown in Figure 2, of thermally conductive material 18, such as aluminium, over which a coat of a polymeric material 22 is preferably placed. This prevents the aluminium from inhibiting the amplification process.

Preferably, however, sheets 12 and 14 are solely comprised of a flexible plastics material. Most preferably, they comprise a sandwich of polyester and polyethylene or polypropylene, having a total thickness of between about 0.06mm and 0.2mm. Such thicknesses are useful as they ensure that the wall is sufficiently thermally conductive, even in the absence of a layer of aluminium. It is important that, whatever the materials selected, the sheets be compliant enough to conform to the surfaces pressed against the opposite sidewalls of compartment 20, shown as side walls 21 and 23 in Figure 2. The two sheets 12, 14 are also heat-sealed around compartment 20 at edge 24 so that a sample liquid L can be introduced by a passageway (not shown) which is then sealed and retained for processing. As shown, the protrusion of compartment 20 occurs only in sheet 12, but it can also occur in sheet 14. To provide selective bursting, a weakened heat seal is provided between the two sheets 12 and 14 to create a future flow passageway 30 which delivers liquid to a detection compartment 32 containing suitably introduced detection reagents, and then to a waste compartment 34. (A storage compartment can also be provided (not shown) similar to compartment 20 but containing liquid reagents.) Dotted line A-A represents the path in cuvette 10 over which pressure means are to travel after suitable heating and cooling of compartment 20. The pressure means compresses at least compartment 20 to force liquid to flow out into compartment 32.

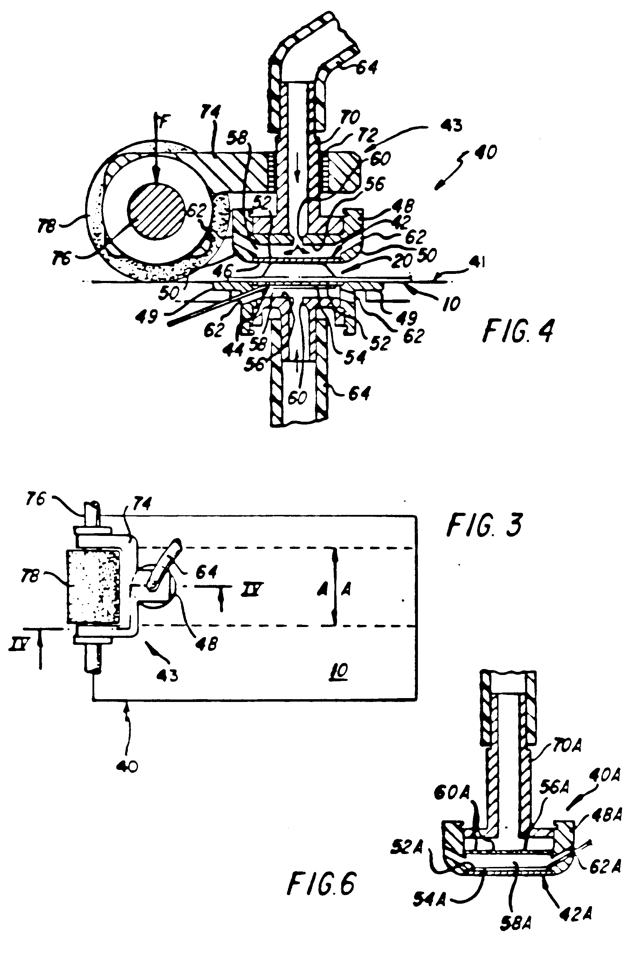

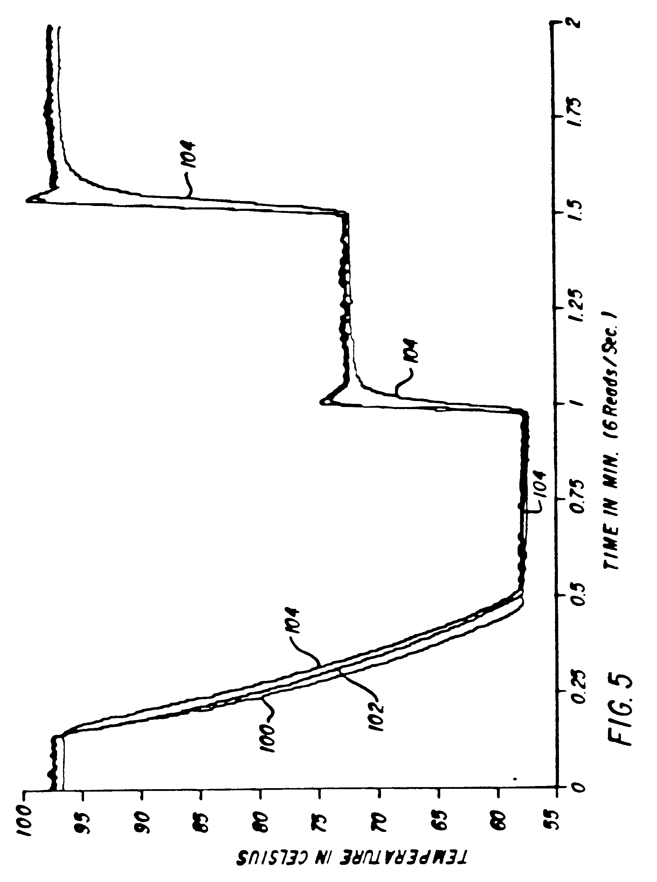

The device 40 of the invention which preferably does the temperature processing of compartment 20 is shown in Figures 3 and 4. It comprises preferably a stationary support 41 and an upper member 43 which moves over the support 41. Alternatively, support 41 can be moved under member 43. Thus, device 40 comprises two opposed platens 42, 44, as shown in Figure 4, which have surfaces 46 to contact the cuvette, generally with the same area (here, circular) as the periphery of the compartment to be heated. Platens 42 and 44 are preferably thermally conductive material, such as aluminium. They can be grooved to allow trapped air to escape.

Platens 42 and 44 are preferably mounted in respective housings 48, 49. Housing 48 is mounted in support 41 and has its outer corners beveled at 50, for reasons which will become apparent. Housing 48 preferably comprises a material which is poorly conducting.

At least one of the two portions 41 and 43 has heating means and preferably means for actively cooling the heating means. ("Active" is used herein to distinguish from passive cooling which always occurs when a heating force, e.g. electricity, is removed.) Thus, on side 52 of platens 42 and 44 which is opposite to side 46, a heating element 54 is disposed (not shown for platen 42 for clarity.) Such a heating element is preferably a flexible, electrically driven device, such as a flexible printed circuit manufactured by Ocean State Thermotics, which can be operated at 24V D.C., to generate 20W of heat.

A conventional temperature sensor is preferably included (not shown), on surface 46 of platen 42 and/or 44. Useful sensors include thermocouple and resistive temperature device (RTD) types.

The housing for each platen 42, 44 has a wall surface 56 spaced away from the platen itself 42, 44 and its heating element 54. This space defines a gas flow cavity 58. In order to actively cool the heating element 54, wall surface 56 is then provided with preferably at least one jet inlet aperture 60, and at least one exhaust aperture 62. Preferably, inlet aperture 60 is disposed directly opposite to, and aimed at, heating element 54. The exhaust aperture(s) 62 are preferably several in number and are disposed around the circumference of each platen 42, 44. A gas hose 64 is fluidly connected to inlet aperture 60, whereas the exhaust apertures 62 deliver the gas from cavity 58 to the atmosphere. Preferably, hose 64 delivers air (or an inert gas) at a pressure of between about 0.98 to about 34.32kPa (about 0.01 and about 0.35 kgf/cm²). Such active cooling provides the rapid decrease in temperature which is desired in reactions such as PCR amplification.

Housing 48 is mounted on a spindle 70, to allow relative movement of the platens 42, 44 towards and away from each other. Since platen 44 and housing 49 are preferably fixed, this requires spindle 70 to be movable away from and towards cuvette 10 which is disposed on platen 44. Preferably this is achieved by mounting spindle 70 in a sliding fit in bushing 72 mounted in a frame 74. Spindle 70 can then be raised and lowered by hand or by automatic means. Alternatively, spindle 70 and platen 42 can be allowed to simply ride over the exterior surface of cuvette 10. Beveled corners 50 thus act to cam platen 42 upward when housing 48 encounters another protruding compartment.

Most preferably, frame 74 is a C-shaped yoke mounted to ride on an axle 76, as shown in Figures 3 and 4. The yoke carries a pressure roller 78 journalled to axle 76. Axle 76 can then be caused to traverse cuvette 10 so that roller 78 follows path A-A, as shown in Figure 3, albeit in a non-continuous motion which allows platens 42, 44 to repeatedly heat and cool each compartment prior to rupture caused by roller 78. The traversal movement of axle 76 is either directed manually or by automated means (not shown).

When compartments such as compartment 20 are to be compressed by roller 78 to force the liquid out into the other passageways, force F of about 9.8 to 68.6N/cm (1 to 7 kgf/cm) of roller length is preferably applied to axle 76, as shown in Figure 4, for a roller which is about 4cm long.

A conventional microprocessor is preferably used (not shown) to control the cycling of heating element 54 and the cooling hose 64.

When in use, the apparatus and the temperature control device are used to rapidly heat a selected portion of the reaction vessel, e.g. a containment compartment which is a reaction compartment, to the necessary high temperature, followed by a rapid cooling to a much lower temperature, achieved by the active cooling means. This is done repeatedly for as many cycles as is necessary for the desired reaction, while upper platen 42 stays in contact with the compartment. In the case of DNA replication by PCR technology, preferred cycling includes up to 50 repetitions, for example.

When the cycling is finished, the temperature control device 40 is moved out of its contact with the compartment, along path A-A and relative to the reaction vessel, by rolling the roller 78. Preferably, the roller 78 then advances into contact with the compartment in which the reaction took place to burst it and to send the contents therein to the next part of the vessel. Following this, device 40 continues on to other liquid-containing compartments in path A-A (not shown in Figure 1). For at least some of the other compartments, repeated temperature cycling is not needed, in each case, so that little or no dwell time is spent by the heating platen over such compartments, and indeed the heater element is turned off. The roller, however, is effective to burst them to push the contents to, e.g. the detection chamber.

More specifically, using the device of this invention, a temperature response curve was obtained as is shown in Figure 5. In this case, the compartment 20 was defined by polyester sheets 12 and 14 having a thickness of 63.5µm (2.5mil). The volume of the compartment was 140µl, and it was 2.16mm thick. The contents was mineral oil (for purposes of measuring temperature), and a thermocouple was inserted into the oil between sheets 12 and 14.

Trace 100 is the temperature which was delivered by platen 44, as measured by a temperature probe. Trace 102 is that of platen 42 itself, and trace 104 is that of the oil inside compartment 20. Trace 104 shows a remarkable correlation and tracking for the temperature inside the compartment, compared to that of the platen 42, even through the drastic heating and cooling which occurs between about 57°C and about 97°C, and back again, all within the cycle time span of about 78s (1.3min) for the selected dwell times. (The temperature plateaus selected in this run correspond to desired temperatures for PCR amplification, as is well-known.) Faster cycling times have also been achieved - as fast as 45s.

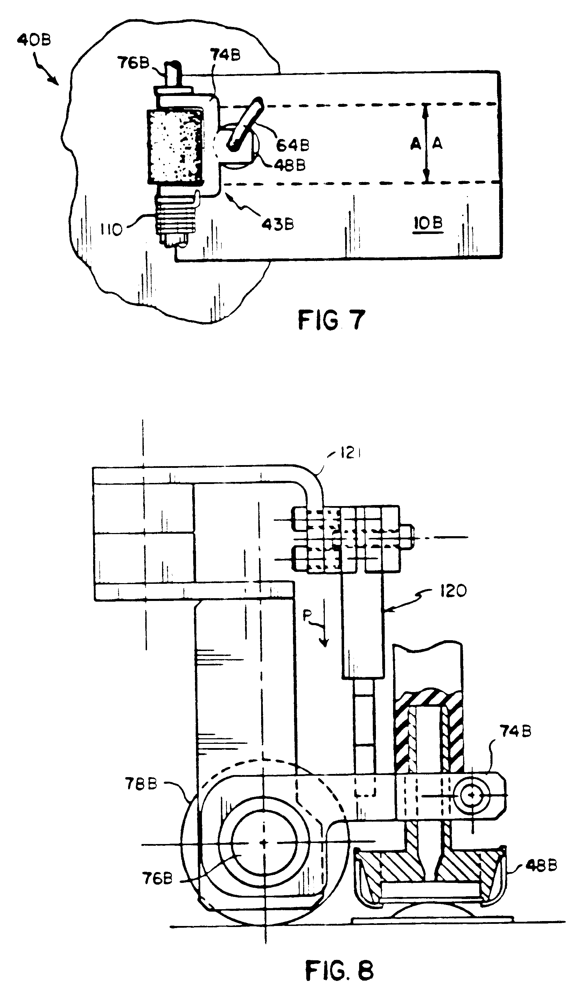

It is not essential that the jet inlet aperture used to cool off the heating element be a single aperture. Instead, it can be a plurality of apertures as shown in Figure 6. Parts similar to those previously described bear the same reference numeral to which the distinguishing suffix "A" has been appended.

Thus, the upper portion of device 40A (only part shown) has a platen 42A in housing 48A with a heating element 54A on surface 52A as described before. Spindle 70A provides air to chamber 58A, and exhaust apertures 62A remove the air. However, in this case there is a plurality of jet inlet apertures 60A, all in surface 56A which is spaced away from heating element 54A.

Most preferably, the upper heating and cooling means is applied with a certain force against the compliant pouch to enhance contact and thus the heat conductivity. This in turn enhances the speed of the reactions therein, as shown in Figure 7. Parts similar to those previously described bear the same reference numeral, to which a distinguishing suffix "B" is applied. Thus, in Figure 7, device 40B preferably comprises a stationary support (not shown) and an upper, movable member 43B, constrained to follow path A-A over a pouch or flexible reaction vessel 10B. Both support and member 43B are generally constructed as described above. In addition, however, upper member 43B includes means 110 for applying a specific loading force against heater platen in housing 48B. As shown, such means is a torsion spring mounted on axle 76B, with a spring constant selected to ensure the application of the desired force, as will be described in detail later. Alternatively, this force applying means 110 can be an additional selected mass mounted on the spindle to which hose 64B is connected, or even in the form of hydraulic means which bias yoke 74B to move downwardly relative to axle 76B with a predetermined force. For example, a piston 120 on frame 121 can be used to apply a variable, pre-selected pressure P as shown in Figure 8.

The amount of loading force needed for optimum compliance of the compartment side wall with the surface of the heating and cooling element, depends on the materials, the material thickness, and content of the compartment. The more flexible, thinner, and compliant each side wall is, the less is the force which is required. Preferably, the side walls and the loading force are selected to produce at least as much compliance of the side walls to the contacting surfaces, as occurs when about 2.6N (270gf or about 0.61bf) of loading force is applied by means 110 to the upper heating and cooling element 43, in contact with a compartment containing 170ml of liquid and comprising two opposed compliant sheets each consisting essentially of a sandwich of about 0.013mm thick polyester and about 0.1mm thick polyethylene. This construction provides a surface area of contact which is about 180mm².

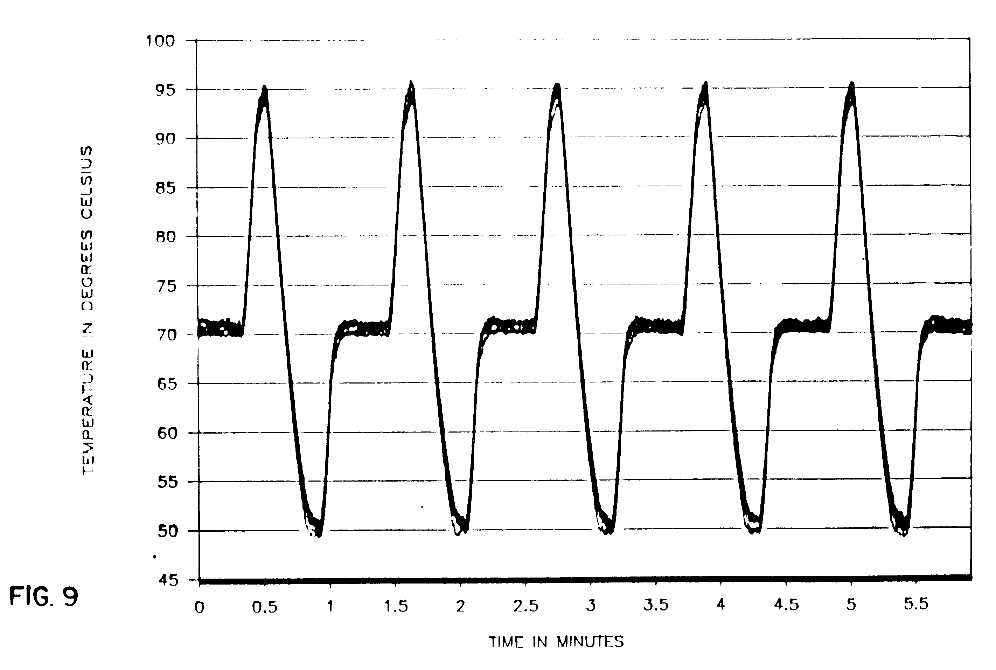

Such compliance and the means which achieve it, have been found to produce extraordinary PCR reactions. Importantly, the contents of the heated and cooled compartment are constrained to better follow the temperature of the heating and cooling means in a repeatable fashion. This is essential since each thermal cycle must be exact in its limits to achieve DNA replication. The reproducibility of the cycles is demonstrated in Figure 9, wherein each curve represents a different compartment in six different reaction vessels, separately sequenced through the apparatus for at least five cycles using 2.2N (227gf) of force. In each case, the contents' temperature was measured by an inserted temperature probe, and the volume of each compartment was 170 to 190µl respectively. The result is that each compartment in each cycle reached a high temperature of at least about 93°C and a low temperature of at least about 50°C, the ranges preferred for PCR processing.

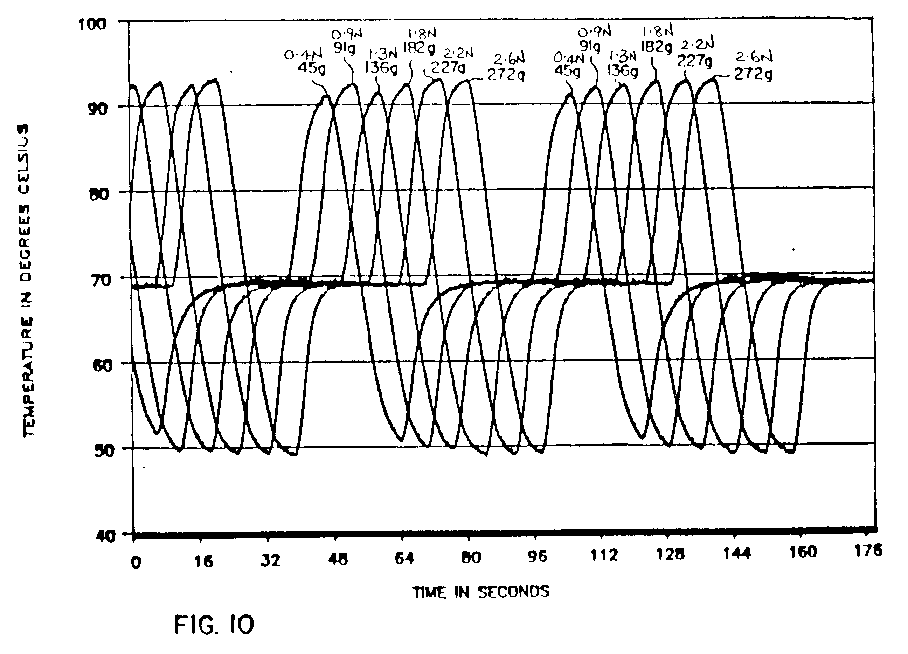

The difficulty of operating at forces less than 2.6N (270gf) can be seen from Figure 10. For these results, each of the examples shown in Figure used a single compartment of the pouch comprising two sheets each consisting essentially of a sandwich of about 0.013mm thick polyester and about 0.1mm thick polyethylene, sealed to provide a confined volume which was substantially filled with about 170ml of water, and then cycled on both sides with device 40B of Figure 7, to achieve the temperatures noted in Figure 10. The pressure applied by means 110 was varied to be the predetermined amount noted for each curve trace. Temperature was sensed inside the compartment. It was not until the force was at least about 2.6N (270gf) (the curve on the right-hand side of the group), for this compliant compartment, that the extreme temperatures of the cycle could be predictably achieved.

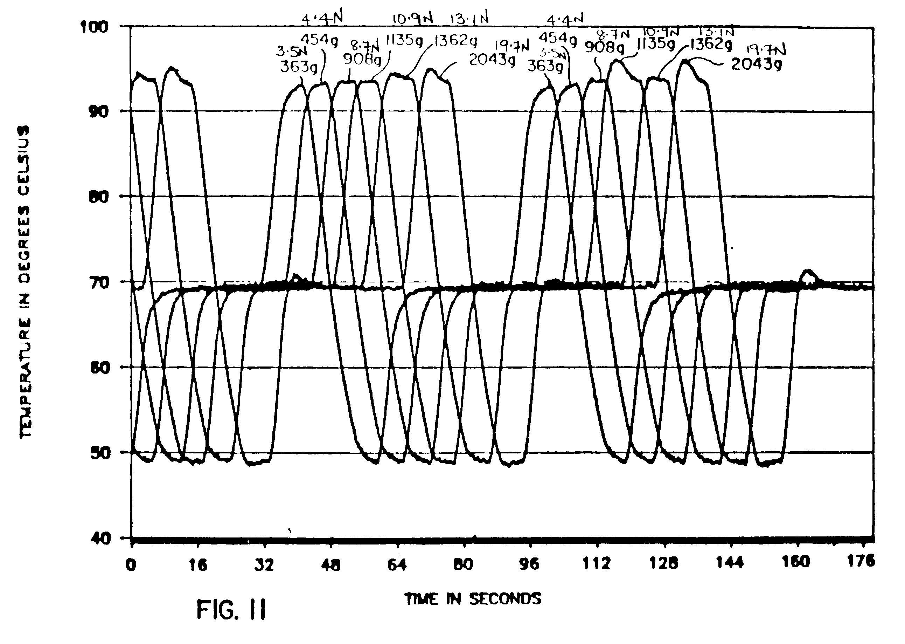

Most preferably, the force applied by means 110 and the compliability of the side walls is at least that achieved by applying at least 8.8N (900gf) of force to the compartment described. This extra force causes the temperature of the contents to track even faster, as is evident from Figure 11, wherein the "flat" or double-peaked portions of the curve tops and valleys at 8.8N (900gf) or higher, indicate the desired end temperature is reached sooner. In these examples, the same procedure was followed as for Figure 10, except that the force exerted by the upper heating and cooling means was one of those noted in Figure 11. The "flat" portion occurs because both the heating means and the cooling means are preferably programmed to provide a flat constant temperature for a few seconds, for example, for about 1s, at the extremes of the cycled temperatures. This ensures that the liquid temperature predictably and repeatedly reaches the needed value. Only those compartments which reach these values in a timely fashion will demonstrate the constancy of that end-point temperature. Apparatus and pouches processed in this manner are better able to control the PCR amplications.

It will be apparent that the upper limit on the amount of force applied by upper member 43, 43A or 43B is determined primarily by the amount of force effective to burst the reaction compartment. The force applied by member 43 is selected to be slightly less than this value, and the force applied by the following roller is slightly greater. The burst force of compartment 20, as shown in Figure 1, can be, e.g. about 17.6N (1800gf).

Some of the curves of Figure 11 show a double peak at the curve tops. This occurs only because the heating element was programmed to overshoot the desired temperature - an unnecessary step when results such as those for the curves at 8.8N (900gf) or higher force, are achieved.

The previously-described embodiments feature the preferred use of the roller as the means for compressing and bursting the liquid-containing chambers. Any other mechanism can be used as well. For example, in Figure 8, roller 78B can be omitted and instead piston 120 can be used to increase the pressure onto chamber 20B until it bursts, for example, at 17.6N (1800gf) of force to cause liquid to flow into the exit passageway (not shown).

## Claims

1. Apparatus for processing a reaction vessel to cycle it through at least two temperature changes, the apparatus comprising:
heating means (54; 54A) for heating at least one side wall (21, 23) of a selected portion (20) of said reaction vessel (10); and
moving means (70, 72, 74; 70A; 74B) for moving the reaction vessel (10) and the heating means (54; 54A) in a prescribed path relative to one another;
characterized in that the apparatus further comprises cooling means (56, 58, 60, 62, 64; 56A, 58A, 60A, 62A) for delivering cooling fluid over said heating means to actively cool the heating means (54; 54A) at repeated intervals, the cooling means (56, 58, 60, 62, 64; 56A, 58A, 60A, 62A) undergoing movement with the heating means (54; 54A).

2. Apparatus according to claim 1, wherein the reaction vessel (10) is flexible and the moving means include compressing means (76, 78; 76B, 78B) for compressing and selectively bursting a portion (20) of the flexible reaction vessel (10) after it has been heated and cooled by the heating means (54; 54A) and the cooling means (56, 58, 60, 62, 64; 56A, 58A, 60A, 62A) respectively.

3. Apparatus according to claim 2, wherein the compressing means comprise a roller (78; 78B) mounted on an axle (76; 76B).

4. Apparatus according to claim 3, wherein the heating means (54; 54A) and the cooling means (56, 58, 60, 62, 64; 56A, 58A, 60A, 62A) are carried on the axle (76; 76B).

5. Apparatus according to claim 4, further including biasing means (110; 120) for biasing the heating means (54; 54A) and the cooling means (56, 58, 60, 62, 64; 56A, 58A, 60A, 62A) against the selected portion (20) of the reaction vessel (10) with a predetermined force.

6. Apparatus according to claim 5, wherein the biasing means (110; 120) is sufficient to compress the reaction vessel (10) into a surface compliance with contacting objects which is at least equivalent to the compliance achieved when using about 2.6N of force delivered over a generally circular area of about 180mm² on a compartment (20) in a reaction vessel (10), the compartment (20) being comprised of opposed side walls (21, 23) each consisting essentially of a sandwich of about 0.013mm thick polyester and about 0.1mm thick polyethylene, and being substantially filled with about 170µl of liquid.

7. Apparatus according to any one of the preceding claims, further including a generally flat support (44) for the reaction vessel (10), and heating means (54; 54A) in the support (44) for heating the other of the side walls (23).

8. Apparatus according to any one of the preceding claims, wherein the cooling means (56, 58, 60, 62, 64; 56A, 58A, 60A, 62A) comprise a jet aperture (60; 60A; 60B) and a source (64) of pressurised gas, the aperture (60; 60A; 60B) being aligned with the heating means (54; 54A) to cool it with the gas.

9. In combination, a flexible, collapsible reaction vessel (10) comprising opposed side walls (21, 23) spaced apart at portions of the vessel (10) to provide a compartment (20), and at least one liquid confined to the compartment (20), the side walls (21, 23) being sufficiently compliant as to conform the liquid-confining side walls (21, 23) to the surface of objects pressing thereagainst, and processing apparatus (40) for the vessel (10) according to any one of the preceding claims.

## Patentansprüche

1. Vorrichtung zum Beaufschlagen eines Reaktionsgefäßes mit mindestens zwei Temperaturwechseln, wobei die Vorrichtung
Heizelemente (54; 54A) zum Erwärmen mindestens einer Seitenwand (21, 23) eines ausgewählten Kammerabschnitts (20) des Reaktionsgefäßes (10) sowie
Bewegungsmittel (70, 72, 74; 70A; 74B) umfaßt, die das Reaktionsgefäß (10) und die Heizelemente (54; 54A) entlang einer vorgegenenen Bahn relativ zueinander bewegen,
**dadurch gekennzeichnet, daß** die Vorrichtung Kühlelemente (56, 58, 60, 62, 64; 56A, 58A; 60A; 62A) aufweist, die Kühlflüssigkeit über die Heizelemente (54; 54A) fördern, um diese in sich wiederholenden Zeitabständen direkt abzukühlen, und die gemeinsam mit den Heizelementen (54; 54A) bewegbar sind.

2. Vorrichtung nach Anspruch 1, dadurch gekennzeichnet, daß das Reaktionsgefäß (10) flexibel ausgebildet ist und die Bewegungsmittel Druckelemente (76, 78; 76A, 78B) aufweisen, die einen Kammerabschnitt (20) des flexiblen Reaktionsgefäßes (10) zusammendrücken und wahlweise aufbrechen, nachdem es von den Heizelementen (54; 54A) erwärmt bzw. von den Kühlelementen (56, 58, 60, 62, 64; 56A, 58A, 60A, 62A) gekühlt worden ist.

3. Vorrichtung nach Anspruch 2, dadurch gekennzeichnet, daß die Druckelemente eine auf einer Achse (76; 76B) gelagerte Walze (78; 78B) umfassen.

4. Vorrichtung nach Anspruch 3, dadurch gekennzeichnet, daß die Heizelemente (54; 54A) und die Kühlelemente (56, 58, 60, 62, 64; 56A, 58A, 60A, 62A) auf der Achse (76; 76B) gelagert sind.

5. Vorrichtung nach Anspruch 4, dadurch gekennzeichnet, daß Vorspannmittel (110; 120) vorgesehen sind, die die Heizelemente (54; 54A) und die Kühlelemente (56, 58, 60, 62, 64; 56A, 58A, 60A, 62A) mit einer vorbestimmten Kraft gegen den ausgewählten Kammerabschnitt (20) des Reaktionsgefäßes (10) vorspannen.

6. Vorrichtung nach Anspruch 5, dadurch gekennzeichnet, daß die Vorspannmittel (110; 120) das Reaktionsgefäß (10) so zusammendrücken, daß ein Flächenkontakt mit damit in Berührung zu bringenden Körpern hergestellt wird, der zumindest einem Flächenkontakt entspricht, der bei Anwendung einer Kraft von etwa 2,6 N auf einen etwa 180 mm² großen, im allgemeinen kreisrunden Bereich eines Kammerabschnitts (20) eines Reaktionsgefäßes (10) entsteht, und daß der Kammerabschnitt (20) aus einander gegenüberliegenden Seitenwänden (21, 23) besteht, von denen jede im wesentlichen aus einem etwa 0,013 mm dicken Schichtenaufbau aus Polyester und einem etwa 0,1 mm dicken Schichtenaufbau aus Polyäthylen besteht und im wesentlichen mit etwa 170 µl Flüssigkeit gefüllt ist.

7. Vorrichtung nach einem der vorhergehenden Ansprüche, dadurch gekennzeichnet, daß ein im allgemeinen flacher Träger (44) für das Reaktionsgefäß (10) sowie im Träger (44) angeordnete Heizelemente (54; 54A) vorgesehen sind, die die andere Seitenwand (23) erwärmen.

8. Vorrichtung nach einem der vorhergehenden Ansprüche, dadurch gekennzeichnet, daß die Kühlelemente (56, 58, 60, 62, 64; 56A, 58A, 60A, 62A) eine Düsenöffnung (60; 60A; 60B) und eine Druckgas-Quelle (64) aufweisen und daß die Öffnung (60; 60A; 60B) auf die Heizelemente (54; 54A) ausgerichtet ist, um diese mittels des Gases zu kühlen.

9. Flexibles, zusammendrückbares Reaktionsgefäß (10), das einander gegenüberliegende Seitenwände (21, 23) aufweist, die an Abschnitten des Reaktionsgefäßes (10) voneinander beabstandet sind und einen Kammerabschnitt (20) bilden, der mindestens eine davon umschlossene Flüssigkeit enthält, wobei die Seitenwände (21, 23) so nachgiebig sind, daß sich die die Flüssigkeit umschließenden Seitenwände (21, 23) an die Oberfläche der dagegendrückenden Körper anpassen, und Vorrichtung (40) zum Beaufschlagen des Reaktionsgefäßes (10) gemäß einem der vorhergehenden Ansprüche.

## Revendications

1. Appareil destiné au traitement d'un récipient réactionnel de manière cyclique à travers au moins deux variations de température, l'appareil comprenant :
des moyens de chauffage (54, 54A) pour chauffer au moins une paroi latérale (21, 23) d'une partie choisie (20) dudit récipient réactionnel (10), et
des moyens de déplacement (70, 72, 74, 70A, 74B) pour déplacer le récipient réactionnel (10) et les moyens de chauffage (54, 54A) dans un espace prescrit l'un par rapport à l'autre,
caractérisé en ce que l'appareil comporte en outre des moyens de refroidissement (56, 58, 60, 62, 64, 56A, 58A, 60A, 62A) destinés à fournir un fluide de refroidissement sur lesdits moyens de chauffage pour refroidir de manière active les moyens de chauffage (54, 54A) à des intervalles répétés, les moyens de refroidissement (56, 58, 60, 62, 64, 56A, 58A, 60A, 62A) subissant un mouvement avec les moyens de chauffage (54, 54A).

2. Appareil selon la revendication 1, dans lequel le récipient réactionnel (10) est souple et les moyens de déplacement comportent des moyens de compression (76, 78, 76B, 78B) pour comprimer et éclater de manière sélective une partie (20) du récipient réactionnel souple (10) après qu'il ait été chauffé et refroidi par les moyens de chauffage (54, 54A) et les moyens de refroidissement (56, 58, 60, 62, 64, 56A, 58A, 60A, 62A) respectivement.

3. Appareil selon la revendication 2, dans lequel les moyens de compression comportent un rouleau (78, 78b) monté sur un axe (76, 76B).

4. Appareil selon la revendication 3, dans lequel les moyens de chauffage (54, 54A) et les moyens de refroidissement (56, 58, 60, 62, 64, 56A, 58A, 60A, 62A) sont portés par l'essieu (76, 76B).

5. Appareil selon la revendication 4, comportant en outre des moyens d'application (110, 120) pour appliquer les moyens de chauffage (54, 54A) et les moyens de refroidissement (56, 58, 60, 62, 64, 56A, 58A, 60A, 62A) contre la partie (20) choisie du récipient réactionnel (10) avec une force prédéterminée.

6. Appareil selon la revendication 5, dans lequel les moyens d'application (110, 120) sont suffisants pour comprimer le récipient réactionnel (10) de manière qu'il présente une surface de contact avec des objets qui est au moins équivalente à la compliance obtenue lorsqu'on utilise une force de 2,6N fournie sur une zone généralement circulaire d'environ 180 mm² d'un compartiment (20) dans un récipient réactionnel (10), le compartiment (20) étant constitué de parois latérales opposées (21, 23), chacune étant constituée essentiellement d'un sandwich de polyester d'une épaisseur d'environ 0,013 mm et de polyéthylène d'une épaisseur d'environ 0,1 mm et étant sensiblement rempli avec environ 170 µl de liquide.

7. Appareil selon l'une quelconque des revendications précédentes, comportant en outre un support (44) généralement plat pour le récipient réactionnel (10) et des moyens de chauffage (54, 54A) dans le support (44) pour chauffer les autres parois latérales (23).

8. Appareil selon l'une quelconque des revendications précédentes, dans lequel les moyens de refroidissement (56, 58, 60, 62, 64, 56A, 58A, 60A, 62A) comportent une ouverture à jet (60, 60A, 60B) et une source (64) de gaz sous pression, l'ouverture (60, 60A, 60B) étant alignée avec les moyens de chauffage (54, 54A) pour les refroidir avec le gaz.

9. En combinaison, un récipient réactionnel (10) souple et écrasable comportant des parois latérales opposées (21, 23) espacées au niveau des parties du récipient (10) pour former un compartiment (20) et au moins un liquide confiné au compartiment (20), les parois latérales (21, 23) étant suffisamment souples pour conformer les parois latérales de confinement du liquide (21, 23) à la surface des objets pressés contre elles et un appareil de traitement (40) pour le récipient (10) selon l'une quelconque des revendications précédentes.
